# EUROPEAN PATENT SPECIFICATION

(11) **EP 1 142 083 B1**
(45) Date of publication and mention of the grant of the patent: **20.08.2003**
(21) Application number: 99966191.1
(22) Date of filing: 13.12.1999
(51) Int. Cl.: H02K 5/24, H02K 1/18, H02K 5/173, H02K 1/27

(54) **APPARATUS AND METHOD FOR REDUCING NOISE AND VIBRATION IN AN ELECTROMOTIVE DEVICE**
VORRICHTUNG UND VERFAHREN ZUR REDUZIERUNG VON GERÄUSCHEN UND VIBRATIONEN IN EINEM ELEKTROMOTORISCHEN GERÄT
APPAREIL ET PROCEDE PERMETTANT DE REDUIRE LES BRUITS ET LES VIBRATIONS DANS UN DISPOSITIF ELECTROMOTEUR

(30) Priority: 14.12.1998 US 211021; 08.10.1999 US 415764
(43) Date of publication of application: 10.10.2001
(73) Proprietor: BEI Sensors & Systems Company, Inc., San Marcos, CA 92069-3009 (US)
(72) Inventor: MORREALE, Anthony, Peter, Bonsall, CA 92003 (US)
(74) Representative: Jackson, David Spence
(86) International application number: US9929561
(87) International publication number: WO00036730

(56) References cited:
- GB-A- 1 207 145
- US-A- 3 546 504
- US-A- 5 235 227
- US-A- 5 537 810
- US-A- 5 802 837

## Description

### Technical Field

The present invention relates generally to vibration and noise damping in electromotive devices such as electric motors and generators.

### Background of the Invention

The components of a conventional electromotive device are rigid and are in direct contact. These rigid parts are typically metal. Having these rigid parts in direct contact is desirable in some respects: for example, the direct contact of metal parts facilitates heat transfer and allows the device to cool sufficiently during operation. In addition, the direct coupling of rigid parts helps to keep moving parts in proper alignment. However, the direct contact of rigid parts also facilitates the transmission of vibrations and consequently results in significant levels of noise.

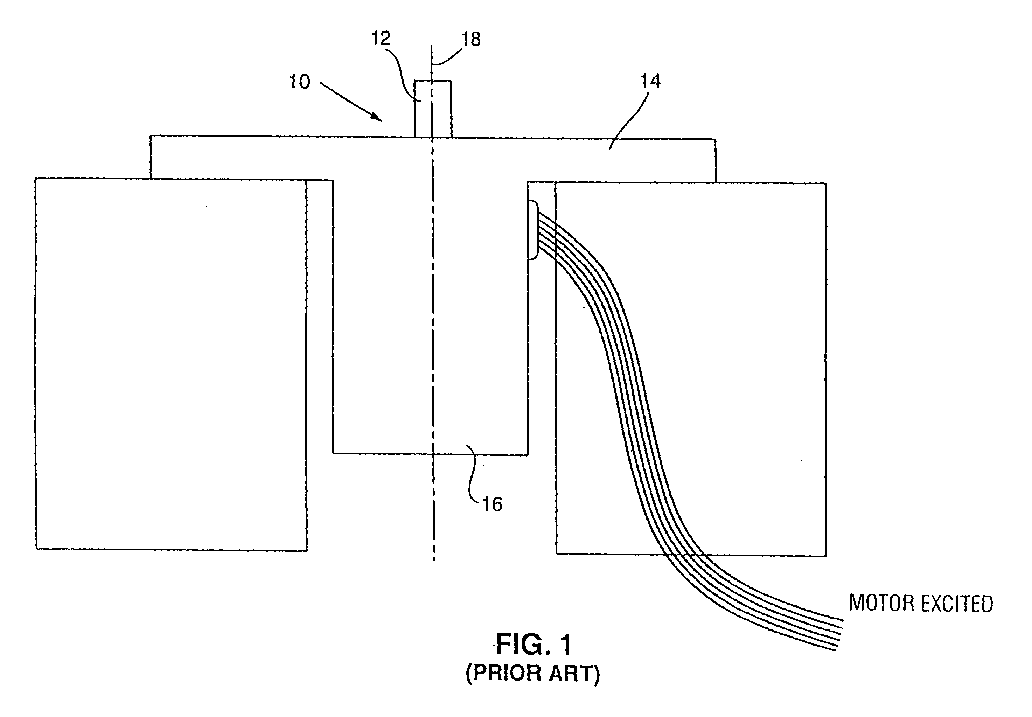

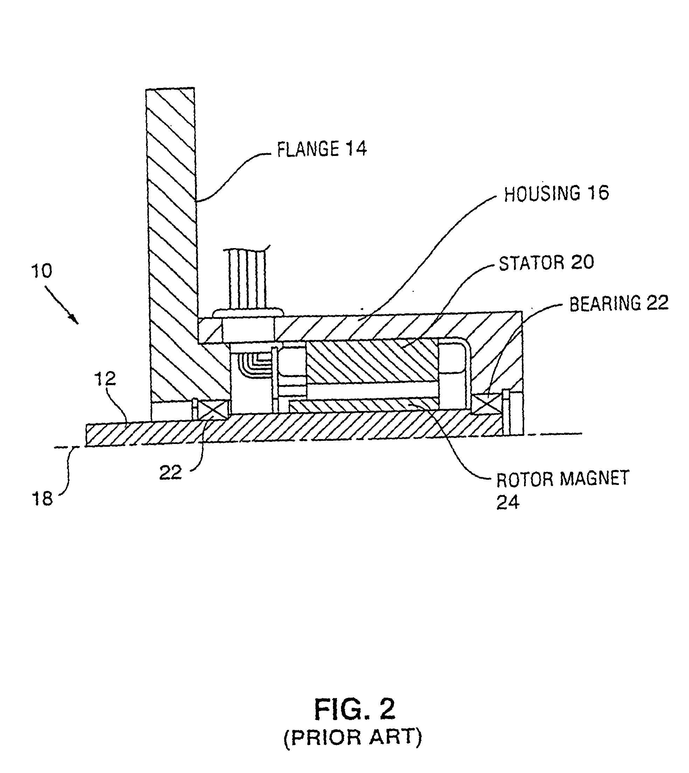

The conventional brushless direct current ("DC") motor illustrated in Figs. 1 and 2 provides an example of this direct contact. Because the rotor magnet 24 in the motor, shown in Fig. 2, is inside the stator 20, the motor is called an "inside" design. In a conventional inside motor, the bearings 22 are in direct contact with the rotor shaft 12, and the motor housing 16 and the stator stack 20 are connected directly to the motor housing. The shaft 12 of the rotor is typically made of steel. The bearings 22 are also typically made of steel. The housing 16 is typically aluminium, or steel.

At rotational speed there will be some degree of residual rotor unbalance, even if a pre-balancing operation is performed prior to use. This unbalance causes vibration in the front and rear bearings. The vibration is conducted, through the metal-to-metal fit of the shaft bearing and housing, directly to the mounting surface. This vibration of the mounting surface will be transmitted to the machine that contains the motor, creating noise in the frame or other components of the machine.

Any vibration that is generated in the rotor is transmitted to the motor stator by variation in the motor air gap. This variation in the air gap changes the radial forces on the stator because of the change in magnetic attraction between the stator and rotor. Stator vibration is then transmitted to the motor housing and then to the frame of the machine to which the motor is fastened.

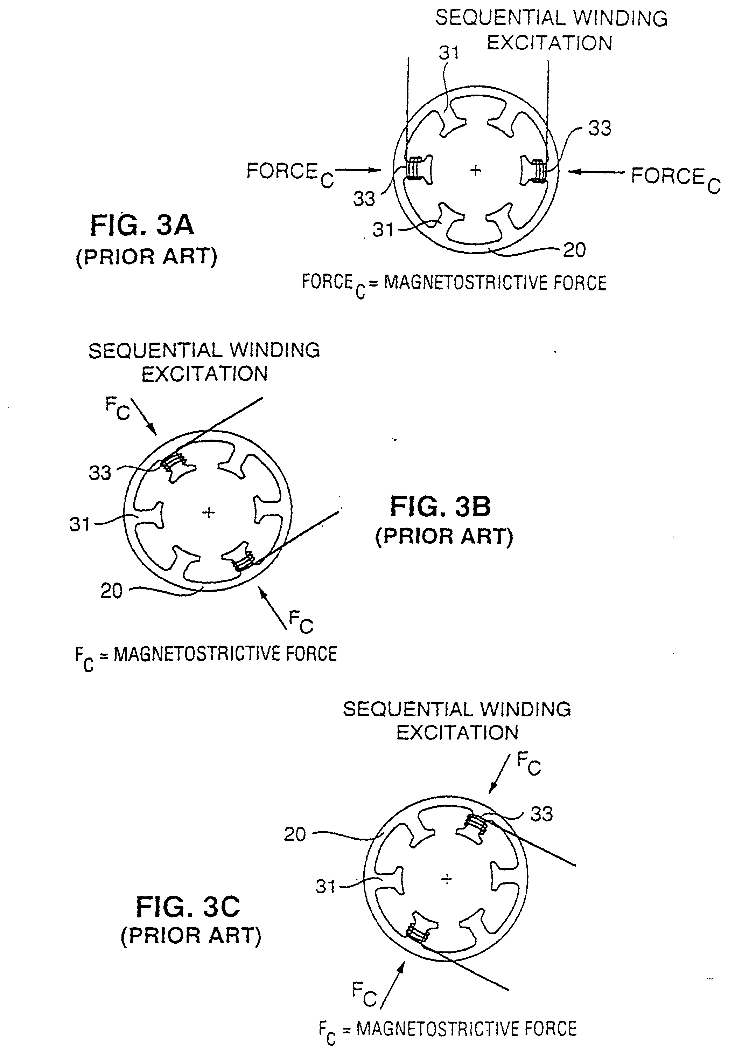

Additional vibration in the stator is caused by magnetostriction in the stator laminations. When the motor in operation, these laminations are constantly being stressed from round to oval as each stator pole pair is electrically energized. The magnetic stress caused by the current flowing through successive coils 33 distorts the stator stack 20 as shown in Figs. 3A, B and C. This variation in stack stress moves the motor housing, thereby generating audible noise as in an audio speaker.

The inventor has previously used urethane bushings around the rotor bearings to dampen noise from the bearings. For example, Model No. D1H18-23-004Z sold by BEI, Kimco Magnetics Division included such urethane bushings. However, the use of urethane bushings around the rotor bearings has met with limited success in that it did not result in a significant reduction in vibration or noise.

United States Patent No. 3 546 504 describes an electric motor having a stator housed within a cylinder of sheet metal held at each end by a bearing support. Each bearing support includes a flange in which a ball bearing is mounted to support a respective end of a rotor shaft on which the rotor of the motor is held within the stator. A layer of material having high inherent damping properties surrounds the stator except at the inner surface of the stator surrounding the rotor. The cylinder of sheet metal housing the stator is disposed on the outer cylindrical surface of the layer of damping material. Between the rotor shaft and each ball bearing an elastic web is arranged for damping, and between each ball bearing and the respective flange supporting it there is a layer of damping material. The bearing supports may each be a sandwich structure of two nesting sheet metal members with a layer of synthetic material between them.

The present invention is defined by claim 1 hereinafter, to which reference should now be made.

In accordance with the present invention, to reduce the generation of vibrations and the resulting generation of audible noise in an electromotive device, vibration damping material is used to de-couple vibrations in the electromotive device which would otherwise be transmitted to other parts of the device. This vibration damping material may be composed of any substance which will cause a significant reduction in the transmission of vibrations, such as silicon rubber, urethane, the "ISODAMP" material manufactured by E-A-R Specialty Composites of Indianapolis, Indiana or material such as the "CHO-THERM" products manufactured by the Chomerics Division, Parker Hannifin PLC of Woburn, Massachusetts.

Although the applications of this invention to an electric motor will be described in detail, the invention is equally applicable to other electromotive devices, such as generators, tachometers and alternators.

The most dramatic improvements in noise suppression have resulted from de-coupling the stator vibrations from the motor housing and the other parts of the motor support structure. This is accomplished by using a layer of vibration damping material between the stator lamination and the housing or support structure. This layer blocks the vibration from the stator magnetostriction and rotor pull effects from being transmitted to the motor housing or support structure.

The most significant noise reduction is achieved when vibration damping material is used to isolate numerous rigid parts which were formerly in contact or otherwise vibrationally coupled, including: (1) the stator and housing or support structure, as described above; (2) the rotor bearings and housing; (3) the housing and front flange/end bell or other structural element; and (4) the rotor and the rotor magnet.

The invention will now be described by way of example with reference to the accompanying drawings, in which:
Fig. 1 illustrates a conventional motor 10 mounted to a frame.
Fig. 2 is a partial cross-section of conventional motor 10 of Fig. 1, taken from the center line 18 of the shaft 12, radially to the mounting frame 14 of the motor 10.
Figs. 3A, B and C are radial cross-sections of the stator 20 partially depicted in Fig. 2, which illustrate the magnetostrictive force caused by the sequential excitation of opposing stator windings.
Fig. 4 is a partial cross-section of an inside motor illustrating bearing damping inserts 26 and 28,stator damping insert 30 and flange damping insert 32, in accordance with an embodiment of the present invention.
Fig. 5 illustrates magnet damping insert 36 between rotor shaft 12 and rotor magnet 24, in accordance with one embodiment of the present invention.

### Detailed Description of the Invention

In the preferred embodiment of the present invention, vibration damping material is used to damp vibrations of the stator, rotor magnet and bearings. Vibration damping material may also be placed between other parts of the electromotive device, such as the housing and support structure or between the housing and the front flange or end bell.

When vibration damping material is used to damp vibrations to or from a particular part of an electromotive device, the vibration damping material so used forms a "vibration damping insert" which is named according to the part. For example, vibration damping material used to damp vibrations to or from a bearing is called a "bearing damping insert".

These vibration damping inserts may be formed from any material suitable for damping vibrations, such as material which has the property of converting a substantial amount of the impinging mechanical energy into heat energy. Examples of such material include silicon rubber and urethane. "ISODAMP" material, manufactured by E-A-R Specialty Composites of Indianapolis, Indiana, has proven to be particularly suitable for fabricating vibration damping inserts. Vibration damping material composed of "SORBOTHANE" material, manufactured by Sorbothane, Incorporated of Kent, Ohio, has also proven to be useful for fabricating vibration damping inserts. Materials such as the "CHO-THERM" products manufactured by Chomerics Division of Parker Hannifin PLC of Woburn, Massachusetts, have a highly desirable combination of vibration damping and heat conduction properties which can make these materials well suited for use as vibration damping inserts.

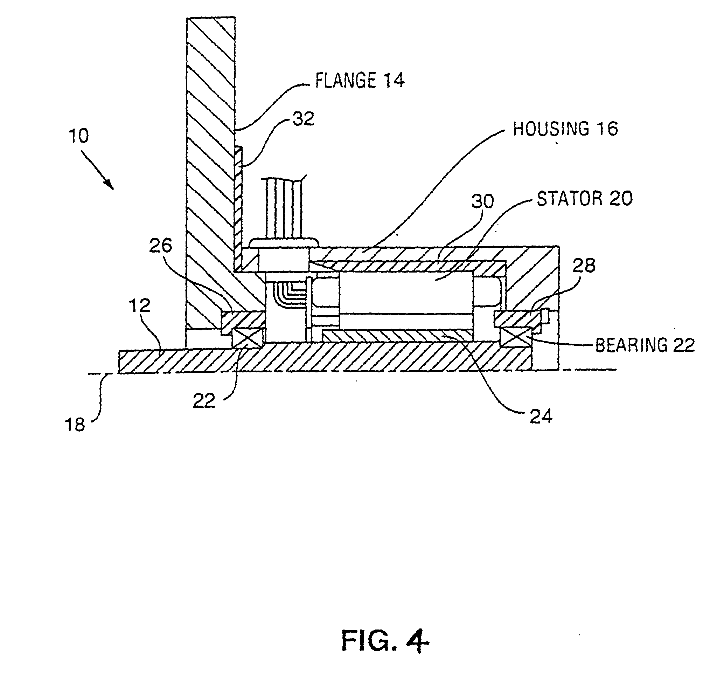

Referring to Fig. 4, elements 26 and 28 are vibration damping inserts which block vibrations from leaving the rotor and rotor bearings of an inside motor, which vibrations would otherwise enter the housing 16 or the flange 14. Elements 26 and 28 are positioned between the outer race of bearings 22 and the flange 14 and housing 16.

Element 30 of Fig. 4 is a stator damping insert which provides a layer of vibration damping material between the stator lamination 20 and the housing 16. This layer blocks the vibration from the stator magnetostriction and rotor pull effects from being transmitted to the motor housing 16.

When the invention is used with inside motors, the thickness of the layer of vibration damping material surrounding the stator can be important: the layer must be thin enough to fit into the space between the stator and the housing and to allow the motor to cool sufficiently during operation, yet thick enough to provide a significant degree of vibration damping. The layer thickness can be especially important for vibration damping materials which are inefficient in heat transfer. In this configuration, the need for heat dissipation must be balanced against the degree of noise suppression. The applicant has found that forming the stator damping insert 30 which a thickness in the range of 0.102 mm to 2.54 mm (.004 inches to .10 inches) allows for sufficient heat dissipation yet provides a significant level of noise suppression.

However, other thicknesses may be used. The 0.102 mm to 2.54 mm thickness range is dependent on various factors, including: the type of material used for the stator damping insert; the size of the motor; the amount of heat produced by the motor during operation; and manufacturing considerations. In general, if the vibration damping material used also has the ability to efficiently conduct heat away from the stator, then a thicker layer can be used.

Referring again to the embodiment shown in Fig. 4, the cross-sectional shape of the stator damping insert 30 resembles a railroad spike. However, the shape of the preferred embodiment of the entire stator damping insert 30 is similar to that of a cylinder with a tapered rim, a thicker wall in the bottom and a circular hole cut in the bottom. The tapered rim allows for the stator 20 to slide more easily into the stator damping insert 30 to permit an interference fit between the stator 20 and the housing 16.

In the preferred embodiment of stator damping insert 30 for inside motors, the bottom wall is thickened to form a "shoulder" against which the end of stator 20 is pressed after stator 20 is inserted into stator damping insert 30. In Fig. 4, this shoulder is adjacent to the arrow indicating the position of stator 20.

Element 32 of Fig. 4 is a flange damping insert formed of vibration damping material, the dimensions of which may be adjusted in accordance with the dimensions of the flange 14. The flange damping insert 32 is placed between the motor housing 16 and from flange 14 or end bell. This vibration damping insert blocks the axial vibration reaching the end bell and provides vibration damping for the flat end cap.

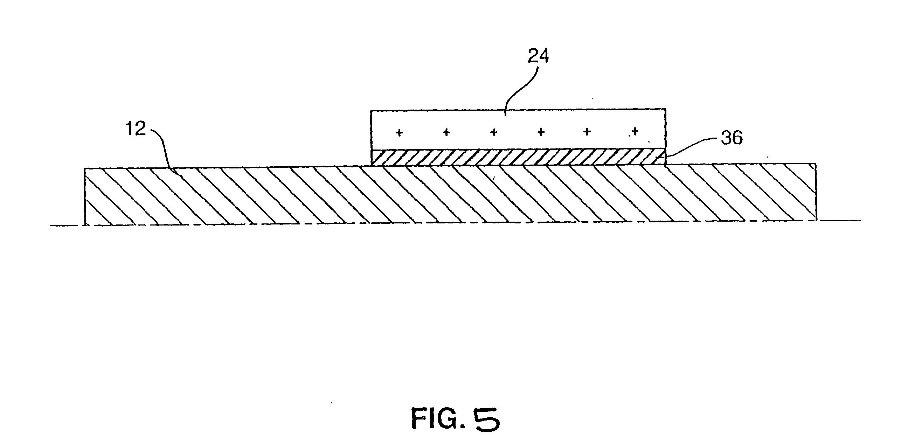

Another useful vibration damping insert of the preferred embodiment, disposed between the rotor shaft 12 and the rotor magnet 24, is shown in Fig. 5. Magnet damping insert 36 can be attached to the shaft 12 by an interference fit or which epoxy. When epoxy is used, the magnet 24 slides on to the shaft 12 and epoxy and vibration damping material 36 are squeezed in between the magnet 24 and the shaft 12.

As a part of the best mode of practicing the invention, the factors which cause noise and/or vibration in the electromotive device should be reduced to a minimum: 1) the rotor balance should be improved, if possible; 2) the air gap distance should be held constant; 3) the windings should be impregnated; and 4) the best bearings and grease lubricants available should be used.

After these vibration sources are minimized, the next step is to block the transmission of the vibration through various rigid barrier transitions of the electromotive device, using one or more of the following steps:
A) The bearings should be supported on vibration damping material, blocking the vibration from leaving the bearings and entering the housing or support structure;
B) The stator should be supported on a layer of vibration damping material between the stator and the housing or support structure, blocking the vibration from the stator magnetostriction and rotor pull effects from being transmitted to the housing or support structure;
C) Vibration damping material should be placed between the rotor and the rotor magnet; and
D) Vibration damping material should be placed between the housing and front flange/end bell or support structure of rotating-shaft devices.

Conventional inside motors of the type shown in Fig. 1 and 2 had noise levels, when tested by a decibel ("dB") meter placed 6 inches from the motor shaft 12, of 60-70 dB in an ambient noise environment of 40 dB. The same motor stator and rotor, when assembled in accordance with steps A, B and D, above (Fig. 4), had motor noise levels of 48-50 dB in an ambient noise environment of 40 dB.

The noise level of a conventional motor, over ambient, was 20-30 dB. The noise level of the embodiment of the present invention shown at Fig. 4 was 8-10 dB over ambient, a ratio of about 3:1. The absolute improvement of 12-20 dB represents a reduction of noise energy to between 1/16 and 1/64 of the conventional design. The machine noise reduction because of this change is equally significant: the resulting noise level was from 1/16 to 1/64 of the original noise level.

Although the foregoing has described an embodiment of this invention in an electric motor, the invention is equally applicable to other electromotive devices, such as generators, tachometers and alternators.

## Claims

1. An electromotive device comprising:
a housing (16);
a flange (14) attached to the housing;
a rotor including a rotor shaft (12) and a rotor magnet (24), the rotor shaft (12) being supported for rotation at a first end by the housing (16) and at a second end by the flange (14);
a stator (20) disposed between the housing (16) and the rotor, the stator (20) having a length and a circumference; and
a stator damping insert (30) disposed between the housing (16) and the stator (20), extending the length of the stator (20) and enclosing the entire circumference of the stator (20), and being formed in the shape of a cylinder with an open top end, a bottom end and side walls, wherein the side walls have a side wall thickness which decreases in the direction of the open end, and the bottom end has a circular aperture.

2. The electromotive device of claim 1, further comprising:
a first bearing (22) disposed between the rotor shaft (12) and the housing (16); and
at least one bearing damping insert (28) disposed between the first bearing (22) and the housing (16).

3. The electromotive device of claim 1 or 2, further comprising:
a second bearing (22) disposed between the rotor shaft (12) and the flange (14); and
at least one bearing damping insert (26) disposed between the second bearing (22) and the flange (14).

4. The electromotive device of claim 1 or 2 or 3, further comprising at least one flange damping insert (32) disposed between the flange (14) and the housing (16).

5. The electromotive device of any preceding claim, further comprising at least one vibration damping insert (36) disposed between, and in contact with, both the rotor shaft (12) and the rotor magnet (24).

6. The electromotive device of any preceding claim, wherein the bottom end of the stator damping insert (30) is formed in the shape of a shoulder against which an end of the stator may be placed.

## Revendications

1. Dispositif électromoteur comprenant :
un carter (16) ;
une bride (14) fixée au carter ;
un rotor comportant un arbre de rotor (12) et un aimant de rotor (24), l'arbre de rotor (12) étant supporté en rotation à une première extrémité par le carter (16) et à une deuxième extrémité par la bride (14) ;
un stator (20) disposé entre le carter (16) et le rotor, le stator (20) ayant une longueur et une circonférence ; et
un insert d'amortissement de stator (30) disposé entre le carter (16) et le stator (20), s'étendant sur la longueur du stator (20) et enfermant toute la circonférence du stator (20), et étant formé en forme de cylindre avec une extrémité supérieure ouverte, une extrémité inférieure et des parois latérales , dans lequel les parois latérales ont une épaisseur de paroi latérale qui diminue dans le sens de l'extrémité ouverte, et l'extrémité inférieure a une ouverture circulaire.

2. Dispositif électromoteur selon la revendication 1, comprenant en outre :
un premier palier (22) disposé entre l'arbre de rotor (12) et le carter (16); et
au moins un insert d'amortissement de palier (28) disposé entre le premier palier (22) et le carter (16).

3. Dispositif électromoteur selon la revendication 1 ou 2, comprenant en outre :
un deuxième palier (22) disposé entre l'arbre de rotor (12) et la bride (14) ; et
au moins un insert d'amortissement de palier (26) disposé entre le deuxième palier (26) et la bride (14).

4. Dispositif électromoteur selon la revendication 1 ou 2 ou 3, comprenant en outre au moins un insert d'amortissement de bride (32) disposé entre la bride (14) et le carter (16).

5. Dispositif électromoteur selon l'une quelconque des revendications précédentes, comprenant en outre au moins un insert d'amortissement de vibration (36) disposé entre, et en contact avec, à la fois l'arbre de rotor (12) et l'aimant de rotor (24).

6. Dispositif électromoteur selon l'une quelconque des revendications précédentes, dans lequel l'extrémité inférieure de l'insert d'amortissement de stator (30) est formée en forme d'épaulement contre lequel une extrémité du stator peut être placée.

## Patentansprüche

1. Elektromotorisches Gerät, das Folgendes umfasst:
ein Gehäuse (16),
einen an dem Gehäuse angebrachten Flansch (14) ;
einen Rotor mit einer Rotorwelle (2) und einem Rotormagnet (24), wobei die Rotorwelle (12) zur Rotation an einem ersten Ende vom Gehäuse (16) und an einem zweiten Ende vom Flansch (14) gelagert wird;
einen Ständer (20), der zwischen dem Gehäuse (16) und dem Rotor angeordnet ist, wobei der Ständer (20) eine Länge und einen Umfang hat; und
einen Ständerdämpfungseinsatz (30), der zwischen dem Gehäuse (16) und dem Ständer (20) angeordnet ist, über die Länge des Ständers (20) verläuft und den gesamten Umfang des Ständers (20) umgibt und der die Form eines Zylinders mit einem offenen oberen Ende, einem unteren Ende und Seitenwänden hat, wobei die Seitenwände eine Seitenwanddicke haben, die in Richtung auf das offene Ende abnimmt, und das untere Ende eine kreisförmige Öffnung hat.

2. Elektromotorisches Gerät nach Anspruch 1, das ferner Folgendes umfasst:
ein erstes Lager (22), das zwischen der Rotorwelle (12) und dem Gehäuse (16) angeordnet ist; und
wenigstens einen Lagerdämpfungseinsatz (28), der zwischen dem ersten Lager (22) und dem Gehäuse (16) angeordnet ist.

3. Elektromotorisches Gerät nach Anspruch 1 oder 2, das ferner Folgendes umfasst:
ein zweites Lager (22), das zwischen der Rotorwelle (12) und dem Flansch (14) angeordnet ist; und
wenigstens einen Lagerdämpfungseinsatz (28), der zwischen dem zweiten Lager (22) und dem Flansch (14) angeordnet ist.

4. Elektromotorisches Gerät nach Anspruch 1 oder 2 oder 3, ferner umfassend wenigstens einen Flanschdämpfungseinsatz (32), der zwischen dem Flansch (14) und dem Gehäuse (16) angeordnet ist.

5. Elektromotorisches Gerät nach einem der vorherigen Ansprüche, ferner umfassend wenigstens einen Vibrationsdämpfungseinsatz (36), der zwischen und in Kontakt mit der Rotorwelle (12) und dem Rotormagnet (24) angeordnet ist.

6. Elektromotorisches Gerät nach einem der vorherigen Ansprüche, bei dem das untere Ende des Ständerdämpfungseinsatzes (30) die Form eines Ansatzes hat, an dem ein Ende des Ständers anliegend positioniert werden kann.
